(19) Europäisches Patentamt
European Patent Office
Office européen des brevets

(11) **EP 2 700 793 B1**

(12) **FASCICULE DE BREVET EUROPEEN**

(45) Date de publication et mention
de la délivrance du brevet:
**30.09.2015 Bulletin 2015/40**

(51) Int Cl.:
*F01N 3/20* (2006.01)    *F01N 9/00* (2006.01)
*F01N 11/00* (2006.01)    *F01N 3/035* (2006.01)

(21) Numéro de dépôt: **13175798.1**

(22) Date de dépôt: **09.07.2013**

(54) **Procédé de correction d'une estimation en masse de suies dans un filtre à particules**

Korrekturverfahren einer Schätzung der Rußmasse in einem Partikelfilter

Method for correcting a soot mass estimation in a particle filter

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.08.2012 FR 1257918**

(43) Date de publication de la demande:
**26.02.2014 Bulletin 2014/09**

(73) Titulaire: **PEUGEOT CITROËN AUTOMOBILES SA
78140 Vélizy-Villacoublay (FR)**

(72) Inventeurs:
• **Faure, SEBASTIEN
92500 Rueil Malmaison (FR)**
• **Colignon, Christophe
95110 Sannois (FR)**
• **Reyes, Frank
78380 Bougival (FR)**

(56) Documents cités:
**EP-A1- 2 163 740    WO-A1-2011/067518
FR-A1- 2 895 445    GB-A- 2 448 993**

**Description**

L'invention porte sur un procédé de correction d'une estimation en masse de suies dans un filtre à particules en tenant compte de l'encrassement dudit filtre en agent de dépollution provenant d'un système réducteur SCR associé (SCR est l'acronyme pour le terme anglais « Selective Catalyst Reduction », signifiant la réduction catalytique sélective).

L'invention est applicable pour tout véhicule équipé d'un système de post traitement des particules comprenant un filtre à particules et un système SCR avec injection d'urée en amont du filtre à particules.

Il est connu d'injecter un agent de dépollution dans la ligne d'échappement d'un moteur à combustion interne. Dans la grande majorité des cas, ceci se fait par une réduction catalytique sélective, autrement appelée SCR. Le procédé de réduction fonctionne par injection dans la ligne d'échappement d'un agent de dépollution dit réducteur SCR, cet agent étant de l'urée ou un dérivé de l'urée. Dans ce qui va suivre, il va être fait référence à l'urée comme agent de dépollution mais la présente invention est applicable à tout autre agent de dépollution.

L'imprégnation SCR peut être sur un monolithe propre en amont ou aval du filtre à particules, ou être sur le filtre à particules lui-même dans le type réducteur SCR sur filtre à particules. L'injection de l'agent de dépollution, c'est-à-dire le plus fréquemment de l'urée en amont du filtre à particules, conduit fréquemment à l'encrassement du filtre à particules par cet agent de dépollution.

Il est connu de contrôler la charge en suies d'un filtre à particules par la présence d'un capteur mesurant une différence de pression aux bornes du filtre à particules ou une pression en amont absolue. Ceci peut aussi bien se faire quand le filtre à particules est isolé du système SCR ou quand les deux sont regroupés dans un même ensemble. Le document EP2163740 A1 divulgue un tel procédé d'estimation de la masse de suie dans un filtre à particules.

Il est aussi connu de prévoir dans la ligne d'échappement un capteur à particules en amont du filtre à particules ou un modèle d'émissions de particules à la source en boucle ouverte estimant une masse de suies dans le filtre à particules.

Un estimateur de masse de suies à l'intérieur du filtre à particules utilise le capteur de pression. Cependant son estimation est faussée par la présence d'agent de dépollution SCR du type urée qui encrasse progressivement et lentement le filtre à particules. De manière générale, l'estimateur détermine la masse de suies dans le filtre à particules en fonction d'un critère relatif à la pression et notamment un critère relatif à la pression différentielle.

Afin de vider régulièrement le filtre à particules des particules de suies qu'il contient, il est prévu une unité de contrôle moteur utilisant les informations des divers éléments mentionnés ci-dessus pour lancer les demandes de régénération du filtre à particules.

L'encrassement d'un filtre à particules par l'agent de dépollution délivrée par un système SCR est un phénomène mal connu. Lors d'un démontage du filtre à particules, il n'est pas possible de diagnostiquer un encrassement excessif dû à cet agent de dépollution à l'intérieur du filtre à particules et encore moins de corriger un tel encrassement. Cet encrassement du filtre à particules est provoqué par de l'agent de dépollution SCR résiduel n'ayant pas servi lors de la réduction des oxydes Nox et qui se retrouve dans le filtre à particules, faussant ainsi la détermination de la masse de particules en fonction du critère relatif à la pression, avantageusement la pression différentielle.

Lors d'un dysfonctionnement de l'injection d'urée en tant qu'agent de dépollution SCR dans la ligne d'échappement, un encrassement par des dépôts d'urée, alors sous forme de polymères, peut avoir lieu, l'encrassement se produisant majoritairement avant le filtre à particules, ceci vers l'injecteur durée, le catalyseur SCR mais également dans l'ensemble SCR et filtre à particules, notamment pour les futures générations de briques de dépollution. De manière générale, si un ou plusieurs des éléments cités ci-dessus se trouvent entre les capteurs de pression. L'estimation de masse de particules dans le filtre à particules par boucle fermée est alors faussée.

S'il n'est pas pris en compte l'encrassement spécifiquement dû à l'urée dans l'encrassement total du filtre à particules dans l'estimation en boucle fermée, la masse de suies dans le filtre à particules est alors surestimée par l'estimateur. Ceci conduit l'estimateur à demander des régénérations trop fréquentes et non nécessaires en rapport à la masse de suies effectivement contenue dans le filtre à particules. L'émission à tort de certains diagnostics de surcharge peut également résulter de cet encrassement en urée du filtre à particules.

Le problème à la base de la présente invention est d'élaborer un procédé de correction d'une estimation en masse de suies dans un filtre à particules qui puisse tenir compte de l'encrassement dudit filtre dû uniquement à l'agent de dépollution du type urée provenant d'un système réducteur SCR associé, afin de pouvoir obtenir une estimation exacte de la masse de suies contenue dans le filtre à particules et de déclencher des régénérations dudit filtre à bon escient.

Pour atteindre cet objectif, il est prévu selon l'invention un procédé de correction d'une estimation en masse de suies dans un filtre à particules en tenant compte de l'encrassement dudit filtre en agent de dépollution provenant d'un système de réduction catalytique sélective ou SCR associé, pour lequel il est sélectionné un critère relatif à la pression et il est mesuré le critère relatif à la pression réel lors d'une mise à jour ainsi qu'il est estimé une masse de suies à l'intérieur du filtre à particules, **caractérisé en ce qu'il** comprend les étapes suivantes:

- calcul du critère relatif à la pression théorique à partir de la masse estimée de suies,
- détermination d'un coefficient de corrélation K étant le rapport du critère relatif à la pression réel sur le critère relatif à la pression théorique,
- pour chaque mise à jour du critère relatif à la pression, calcul d'un coefficient de corrélation K, le coefficient de corrélation $K_n$ pour la nième mise à jour étant défini par :

$$K_n = \frac{\sum(Crit\_DP_{theo} \cdot Crit\_DP_{reel})}{\sum Crit\_DP_{theo}^2}$$

où $Crit\_DP_{théo}$ est le critère relatif à la pression théorique et $Crit\_DP_{réel}$ est le critère relatif à la pression réel,
- détermination d'un coefficient de corrélation moyen $K_{moy}$ des coefficients $K_1$ à $K_n$ des n mises à jour, ce coefficient de corrélation moyen $K_{moy}$ étant représentatif de l'encrassement en agent en dépollution du filtre à particules,
- prise en compte du coefficient de corrélation moyen $K_{moy}$ pour la réactualisation du mode de calcul de la masse estimée en suies du filtre à particules et/ou pour la quantification de l'encrassement en agent de dépollution du filtre à particules.

L'effet technique est d'obtenir une prise en compte de l'encrassement du filtre à particules en agent de dépollution, le plus fréquemment de l'urée, ce qui n'avait pas encore été obtenu jusqu'ici. Ceci permet de ne pas surestimer la masse de suies dans le filtre à particules et de demander des régénérations du filtre à particules qui correspondent à la masse réelle de suies dans le filtre à particules. Le procédé est mis en oeuvre parallèlement à un procédé de détermination de la masse de suies en étant intégré audit procédé de détermination et en présentant des modules de calcul communs avec ce procédé de détermination, ce qui lui confère un coût de mise en oeuvre limité.

Avantageusement, la réactualisation du mode d'estimation de la masse de suies du filtre à particules s'effectue avec la correction du critère relatif à la pression réel en fonction du coefficient de corrélation moyen $K_{moy}$ en déterminant un critère relatif à la pression corrigé selon la formule :

$$Crit\_DP_{cor} = \frac{Crit\_DP_{reel}}{K_{moy}}$$

Avantageusement, l'estimation de la masse de suies se fait en boucle fermée lors de la détermination du critère relatif à la pression corrigé en tenant compte d'un ou d'autres paramètres influant sur la masse de suies pris unitairement ou en combinaison comme l'encrassement du filtre à particules ou le roulage du véhicule automobile embarquant le filtre à particules.

Avantageusement, la quantification de l'encrassement en agent de dépollution du filtre à particules se fait par la détermination d'une caractéristique C par cartographie en fonction du coefficient de corrélation $K_{moy}$, cette caractéristique C servant de base à une stratégie de décrassage du filtre à particules ou un diagnostic concernant son encrassement en agent de dépollution.

Avantageusement, le critère relatif à la pression est fonction de la différence de pression aux bornes du filtre à particules.

Avantageusement, le critère relatif à la pression est un critère DPDV calculé selon la formule :

$$DPDV = \frac{\sum(DP \cdot Q_{vol})}{\sum Q_{vol}^2}$$

pour laquelle DP est la différence de pression aux bornes du filtre à particules et $Q_{vol}$ le débit volumique dans le filtre à particules.

Avantageusement, lors du calcul du critère relatif à la pression théorique, le calcul est affiné en tenant compte d'autres paramètres tels que l'encrassement du filtre à particules ou le roulage du véhicule automobile embarquant le filtre à particules.

Avantageusement, la détermination du coefficient de corrélation moyen $K_{moy}$ des coefficients $K_1$ à $K_n$ des n mises à jour se fait par régression linéaire, par moyenne glissante sur les n coefficients $K_1$ à $K_n$ ou par filtre basse bas.

Avantageusement, quand la détermination du coefficient de corrélation moyen $K_{moy}$ des coefficients $K_1$ à $K_n$ des n mises à jour se fait par régression linéaire, le coefficient de corrélation moyen $K_{moy}$ est exprimé sous la forme d'une droite d'équation:

$$K_{moy(n)} = A_n \cdot Encrassement + B_n$$

avec:

$$A_n = \frac{n \cdot \sum(Encrassement_i \cdot K_i) - (\sum Encrassement_i) \cdot (\sum K_i)}{n \cdot \sum Encrassement_i^2 - (\sum Encrassement_i)^2}$$

et

$$B_n = \frac{\sum Encrassement_i^2 \cdot \sum K_i - \sum Encrassement_i \cdot \sum(Encrassement_i \cdot K_i)}{n \cdot \sum Encrassement_i^2 - (\sum Encrassement_i)^2}$$

Avantageusement, le calcul du critère relatif à la pression théorique se fait sur une distance de l'ordre de quelques kilomètres, le calcul du coefficient de corrélation K se fait sur une distance entre 200 et 1.000 kilomètres tandis que le calcul du coefficient de corrélation moyen $K_{moy}$ se fait entre 5.000 kilomètres et 10.000 kilomètres.

D'autres caractéristiques, buts et avantages de la présente invention apparaîtront à la lecture de la description détaillée qui va suivre et au regard des dessins annexés donnés à titre d'exemples non limitatifs et sur lesquels :

- la figure 1 est une représentation schématique des étapes du procédé de correction d'une estimation en masse de suies dans un filtre à particules selon la présente invention,
- la figure 2 est une représentation schématique des étapes du procédé selon la présente invention prenant place dans le module de correction unitaire,
- la figure 3 est une représentation schématique d'une courbe donnant le critère relatif à la pression DPDV réel en fonction du critère relatif à la pression DPDV théorique, la comparaison de ces deux critères étant utilisée dans un mode de réalisation du procédé selon la présente invention,
- la figure 4 est une représentation schématique d'une courbe donnant le coefficient de corrélation moyen $K_{moy}$ en fonction du pourcentage d'encrassement du filtre à particules, le coefficient de corrélation moyen $K_{moy}$ étant calculé conformément à une étape du procédé selon la présente invention,
- la figure 5 est une représentation schématique d'une courbe donnant la caractérisation chiffrée C de l'encrassement en urée, en tant qu'agent de dépollution SCR en fonction du coefficient de corrélation moyen $K_{moy}$, la caractérisation C étant calculée dans le module de quantification et/ou qualification selon une étape du procédé de la présente invention.

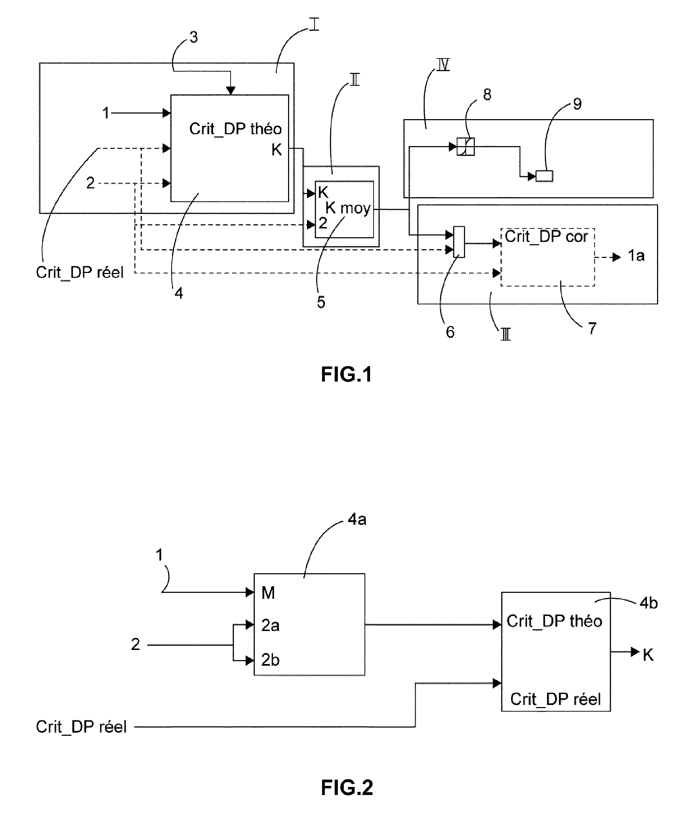

En se référant à la figure 1 ainsi qu'à la figure 2 pour ce qui est spécifiquement relatif au module de correction unitaire, le procédé de correction d'une estimation en masse de suies dans un filtre à particules selon la présente invention comprend quatre groupes d'étapes. Le premier groupe I concerne les étapes prenant place dans un module de correction unitaire 4 permettant de calculer un coefficient de corrélation K entre un critère relatif à la pression réel ou Crit_DP$_{réel}$ et un critère relatif à la pression théorique ou Crit_DP$_{théo}$. Le critère de pression théorique est calculé à partir d'une information référencée 1 de masse de suies entrante dans le filtre à particules, soit par mesure d'un capteur soit par utilisation d'un modèle. A la figure 1, les lignes dessinées en pointillées représentent des opérations déjà connues de l'état de la technique.

Le calcul du coefficient de corrélation K peut s'effectuer après une régénération complète du filtre à particules, transmise au module de correction unitaire 4 par la boucle 3. Dans le calcul du coefficient, il peut être tenu compte de différentes grandeurs référencées 2 affinant le calcul, par exemple, sans que cela soit limitatif, le roulage du véhicule automobile comportant le filtre à particules et l'encrassement du filtre. En regard de la figure 2, il est avantageusement procédé dans un sous module 4a au calcul du critère relatif à la pression théorique Crit_DP$_{théo}$ à partir de la masse M de suies et des différentes grandeurs divisées en deux groupes 2a et 2b. Ensuite, il est procédé au calcul du coefficient de corrélation K dans le sous-module 4b à partir du critère relatif à la pression réel Crit_DP$_{réel}$ et du critère relatif à la pression théorique Crit_DP$_{théo}$. Ceci se fait avantageusement par régression linéaire à chaque mise à jour des critères relatifs à la pression.

Le second groupe II concerne l'étape du procédé relatif à la correction des coefficients de corrélation $K_1$ à $K_n$ sur n chargements afin de calculer un coefficient de corrélation moyen $K_{moy}$ qui moyenne les différents coefficients de corrélation sélectionnés. Il peut encore être tenu compte de différentes grandeurs 2, ce calcul étant fait dans le module 5.

Les troisième III et quatrième IV groupes travaillent en parallèle. Le troisième groupe III concerne la correction de l'estimateur de la masse de suies fonctionnant en boucle fermée afin d'avoir une estimation non faussée de la masse de suies dans le filtre à particules du fait de la prise en compte de l'agent de dépollution, c'est-à-dire le plus souvent l'urée, dans les suies. Ceci est fait dans le module 6 en divisant le critère de pression réel Crit_DP$_{réel}$ par le coefficient moyen K$_{moy}$ en obtenant un critère de pression corrigé ou Crit_DP$_{cor}$, avantageusement aussi corrigé par les différentes grandeurs 2 dans le module en boucle fermée 7 dans lequel une nouvelle masse de suies 1a est estimée, cette dernière correction étant connue de l'état de la technique mais par pour un critère déjà corrigé dans le module 6.

Le quatrième groupe IV concerne la quantification et/ou la qualification de l'encrassement en agent de dépollution, ce qui permet éventuellement de diagnostiquer un trop fort encrassement en agent de dépollution du filtre à particules, mettant le client en risque de sur dilution et donc de casse moteur. Ce diagnostic permet aussi de demander au conducteur de ne plus rouler en ville, par exemple lors d'une reconfiguration d'un filtre à particules surchargé. Cette quantification et/ou qualification peut permettre aussi d'alimenter une éventuelle stratégie de décrassement en agent de dépollution du filtre à particules, notamment par des régénérations volontairement très exothermiques pour briser les agglomérats d'agent de dépollution, par exemple de l'urée.

En alternative ou en complément, il est aussi possible de procéder à une reconfiguration, avantageusement rendue invisible au conducteur, demandant de moins injecter d'agent de dépollution, au détriment de la performance de réduction des oxydes d'azote ou NO$_x$ sur certains profils, le temps de faire les réparations en garage, par exemple lors d'un changement du filtre à particules. Dans le groupe IV, il est donc procédé à la quantification de l'encrassement en agent de dépollution en 8, cette quantification de l'encrassement en agent de dépollution 8 pouvant servir à l'élaboration d'un diagnostic d'encrassement et/ou à l'élaboration d'une stratégie de décrassage.

Il peut être pris comme critère relatif à la pression le critère DPDV ou DP/DV massivement employé dans les estimateurs de suies pour déterminer la masse de suies dans un filtre à particules. Ceci n'est cependant pas limitatif et un autre critère relatif à la pression, absolue ou pression différentielle, peut aussi être utilisé dans le procédé selon la présente invention. De manière générale, le critère DPDV est préféré mais d'autres critères peuvent également être utilisés en alternative ou en combinaison avec ce critère. Des paramètres autres que l'estimation de l'encrassement peuvent être utilisées, par exemple des paramètres 2 liées au type de roulage pouvant impacter la répartition des suies dans le filtre à particules et donc la différence de pression propre à la masse de suies. Ceci permet d'affiner le calcul du coefficient de corrélation K.

Le critère DPDV consiste en une régression linéaire sur une zone restreinte de débit volumique, par exemple généralement entre 0.01 m3/s et 0.1 m3/s pour la plupart des filtres à particules, sur laquelle zone la différence de pression ou ΔP qui est la pression différentielle aux bornes du filtre à particules chargé en suies est relativement linéaire en fonction du débit volumique, désigné par Q$_{vol}$.
On a donc :

$$DPDV = \frac{\Sigma(DP \cdot Q_{vol})}{\Sigma Q_{vol}{}^2}$$

On a alors $\Delta P = DPDV \cdot Qvol$ pour une masse M de suies donnée. On a donc $DPDV = f(M)$ et c'est cette relation qui est inversée de manière connue pour avoir une estimation de la masse M de suies dans un filtre à particules par boucle fermée. D'où on obtient $M = f^{-1}(DPDV)$. Il est aussi possible d'affiner la précision de la fonction $f$ par une dépendance à l'encrassement estimé du filtre à particules.

En se référant aux figures 1 et 2, grâce à une cartographie de référence donnant la relation entre le critère relatif à la pression théorique en fonction de la masse de suies dans le filtre à particules, il est possible de comparer le critère relatif à la pression réel ou Crit_DP$_{réel}$ sur plusieurs zones de chargement, entre des régénérations qui ont été complètes. Ceci permet d'utiliser le modèle en boucle ouverte uniquement ou le capteur de particules en assimilant la masse de suies à la sortie du moteur à la masse de suies dans le filtre à particules. A la figure 1, au groupe III, la corrélation est réintroduite après le calcul du critère relatif à la pression réel Crit_DP$_{réel}$ pour que l'estimateur en boucle fermée puisse calculer la masse de suies dans le filtre à particules selon le critère relatif à la pression réel Crit_DP$_{réel}$.

Dans le cas d'un filtre à particules additivé, la dépendance à l'encrassement en cendres de combustion, hors dépôts d'agent de dépollution, par exemple de l'urée polymérisée, est prise en compte. L'encrassement est déjà modélisé dans les unités de contrôle commande selon l'état de la technique et utilisé pour adapter certaines fonctions de contrôle, notamment en tant qu'estimateur de masse de particules en boucle fermée.

A la figure 2, lors des étapes de correction unitaire, il est donc calculé dans le sous module 4a un critère relatif à la pression théorique ou Crit_DP$_{théo}$. Dans le module 4a, le relatif à la pression théorique ou Crit_DP$_{théo}$ s'exprime de la manière suivante :

$$Crit\_DP_{theo} = g\left(masse\ suies\ BO, autres \dots\right)$$

la masse de suies BO étant la masse de suies estimée en boucle ouverte.

En se référant à la figure 1, après chaque régénération transmise en 3 au module 4, la masse de suies entrante dans le filtre à particules donnée en 1, peut être calculée par l'estimateur en boucle ouverte entrante via un modèle ou mesurée par au moins un capteur. Pour indication, la masse de suies dans le filtre à particules peut être connue par intégration temporelle d'un signal de capteur de particules, généralement en mg/m3 multiplié par le débit volumique ou $Q_{vol}$ en m3/s, corrigé ou non par un modèle de combustion CRT relatif à une technologie de régénération continue. Il est aussi possible d'utiliser un modèle cartographié, par exemple en dépendance du régime, du couple, de la température d'eau, de la richesse mesurée en sortie moteur et aussi de la différence de pression aux bornes du filtre à particules.

Cet estimateur ne nécessite pas d'essais supplémentaires car il est obtenu lors de la phase de mise au point de l'estimateur en boucle fermée :

$$asse\ suies\ BF = f\left(Crit\_DP,\ autres \dots\right)$$

En figure 2, il est mesuré un critère relatif à la pression réel $Crit\_DP_{réel}$. Dans le sous module 4b, il est calculé le rapport du critère relatif à la pression réel $Crit\_DP_{réel}$ sur le critère relatif à la pression théorique ou $Crit\_DP_{théo}$. Ce rapport donne le coefficient de corrélation K qui va être utilisé dans la suite du procédé de correction selon l'invention.

Ainsi, après toute régénération considérée comme complète, pour laquelle la masse de suies intra filtre à particules est inférieure à quelques grammes par exemple 2 à 3 g et à chaque mise à jour du critère relatif à la pression, la fonction du sous module 4b est de calculer, sur toute la période de chargement, avantageusement par l'intermédiaire d'une régression linéaire avec les points $Crit\_DP_{théo}$ et $Crit\_DP_{réel}$, une relation du type :

$$Crit\_DP_{reel} = K_n \cdot Crit\_DP_{theo}$$

A chaque mise à jour du critère relatif à la pression réel ou $Crit\_DP_{réel}$, il est calculé un coefficient de corrélation $K_n$ qui est donné par les formules suivantes :

$$K_n = \frac{\sum\left(Crit\_DP_{theo} \cdot Crit\_DP_{reel}\right)}{\sum Crit\_DP_{theo}^2}$$

$$Crit\_DP_{reel} = K_n \cdot Crit\_DP_{theo}$$

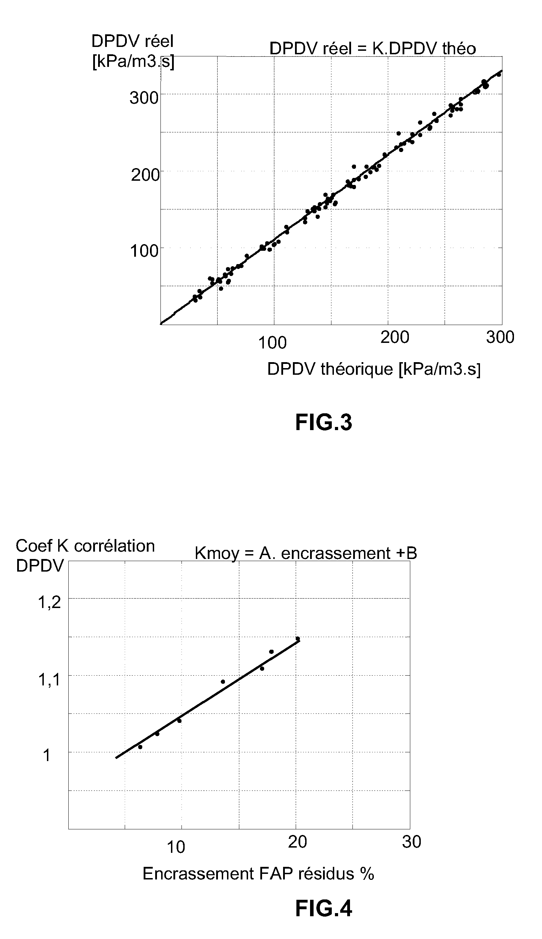

Dès une nouvelle demande de régénération, il y a convergence vers des valeurs de K représentatives de la corrélation entre le critère théorique $Crit\_DP_{théo}$ et le critère réel $Crit\_DP_{réel}$ de la phase de chargement du filtre à particules précédente. Quand il est pris pour critères relatifs à la pression réelle et théorique les critères correspondants DPDV, on obtient une droite montrée à la figure 3 avec le critère relatif à la pression DPDV réel en fonction du critère relatif à la pression DPDV théorique.

En se référant à nouveau à la figure 1, dans le groupe II, il est procédé à la moyenne des coefficients de corrélation K en obtenant un coefficient de corrélation moyen $K_{moy}$. Le type de correction adaptée pour réaliser cette moyenne est avantageusement une correction lente sur la vie du véhicule car le phénomène à toiser, c'est-à-dire l'encrassement par l'agent de dépollution, fréquemment des polymères d'urée, est un phénomène lent et se produisant sur plusieurs milliers de kilomètres.

Le filtre avantageusement utilisé pour moyenner les coefficients de corrélation $K_n$ successifs peut être également une régression linéaire sur au moins n échantillons, par exemple de l'ordre de 5 à 10. Cependant, ceci n'est pas limitatif et, par exemple, une moyenne glissante sur n coefficients de corrélation ou un filtre passe bas pourrait également convenir. Il convient de ne pas faire de corrections trop fréquemment, d'où l'utilisation d'une variable d'évolution lente en tant qu'abscisses des points à régresser.

Avantageusement, la variable d'évolution lente peut être l'encrassement estimé ou le kilométrage, de l'ordre de milliers de kilomètres et la mise à jour du coefficient de corrélation moyen $K_{moy}$ se fait tous les x % d'encrassement, x étant de l'ordre de 1 % ou tous les k kilomètres, k étant de l'ordre de 5.000 km par exemple, le roulage partant de la dernière régression linéaire effectuée.

La valeur initiale et normale du coefficient de corrélation K est 1, ce qui correspond au cas où il n'y a pas d'encrassement en agent de dépollution, par exemple l'urée. Il est donc recherché à régresser les points Encrassement référencés i ainsi que les coefficients $K_i$ par une droite passant par le point d'encrassement. D'où il est obtenu :

$$K_{moy(n)} = A_n \cdot Encrassement + B_n$$

avec $A_n$ et $B_n$ définis comme :

$$A_n = \frac{n \cdot \sum(Encrassement_i \cdot K_i) - (\sum Encrassement_i) \cdot (\sum K_i)}{n \cdot \sum Encrassement_i^2 - (\sum Encrassement_i)^2}$$

et

$$B_n = \frac{\sum Encrassement_i^2 \cdot \sum K_i - \sum Encrassement_i \cdot \sum(Encrassement_i \cdot K_i)}{n \cdot \sum Encrassement_i^2 - (\sum Encrassement_i)^2}$$

Afin d'éviter des cas de $K_{moy}$ inférieure à 1, ce qui représente un cas non physique car l'encrassement en agent de dépollution, par exemple l'urée, a forcément tendance à élever le critère relatif à la pression pour une masse de suies constante, une saturation minimale à 1 est utilisée. La figure 4 montre le coefficient de corrélation $K_{moy}$ pour lequel $K_{moy}$= A. Encrassement + B après sélection du point 20% d'encrassement pour un coefficient de corrélation de 1,15 et 7 mesures de coefficient de corrélation.

En se référant à la figure 1, par le groupe III des étapes du procédé selon l'invention, il est procédé à la correction de la boucle fermée de l'estimateur de suies, avec correction du critère relatif à la pression par un critère relatif à la pression corrigé ou Crit_DP$_{cor}$ obtenu selon l'équation :

$$Crit\_DP_{cor} = \frac{Crit\_DP_{reel}}{K_{moy}}$$

ceci, afin de réinjecter dans l'estimateur à boucle fermée un critère corrigé plus faible, afin de ne pas prendre en compte l'impact de la différence de pression de l'encrassement par l'agent de dépollution, par exemple l'urée, dans l'estimation. Ceci est important pour les diagnostics de surcharge du filtre à particules par exemple ou pour certaines règles de décisions de lancement de régénérations sur la masse de suies estimée.

En se référant à la figure 1, pour le groupe IV des étapes du procédé selon l'invention, en fonction du coefficient de corrélation moyen $K_{moy}$ transmis à ce groupe IV, on peut arriver à donner un ordre de grandeur à l'encrassement en agent de dépollution, par exemple l'urée. Plus $K_{moy}$ est grand, plus l'encrassement en agent de dépollution est fort. On en déduit une caractéristique chiffrée C par la cartographie référencée 8. Cette caractéristique peut être utilisée de manière progressive, si la technique de l'encrassement est suffisamment maîtrisée ou utilisée en tout ou rien, selon la maturité de connaissance de l'encrassement. Ceci permet d'alimenter des stratégies éventuelles de décrassage du filtre à particules ou SCR sur filtre à particules en agent de dépollution, par exemple l'urée, régénérations fortement chargées pour casser, le cas échéant, les polymères d'urée, voire de diagnostic d'encrassement du filtre, si il n'est pas possible de décrasser le filtre, ce qui est symbolisé par la référence 9 à la figure 1.

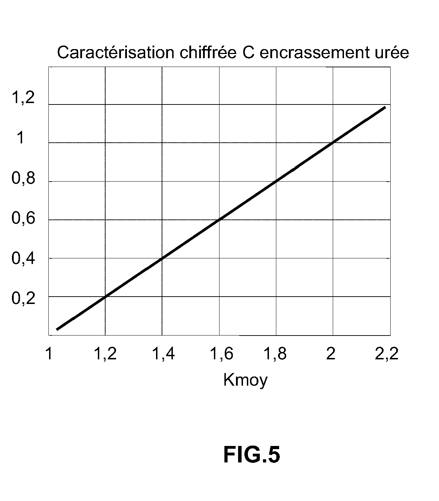

En discret, quand la caractéristique chiffrée C est égale à 0 il n'y a aucun encrassement en agent de dépollution et quand la caractéristique chiffrée C est égale 1, l'encrassement implique un diagnostic ou une demande de décrassage si cette opération est possible. En continu, la valeur de la caractéristique chiffrée C peut alimenter une stratégie de décrassage, par exemple une adaptation progressive du nombre de régénérations à forte thermique, ce nombre de régénérations à faire augmentant par exemple plus la caractéristique chiffrée C est grande. La figure 5 montre une caractéristique chiffrée C de l'encrassement en urée comme agent de dépollution SCR en fonction du coefficient de corrélation moyen $K_{moy}$.

Dans le mode préféré de réalisation de l'invention, sans que ce mode soit aucunement limitatif, le procédé de correction peut reposer sur une succession de régressions linéaires. En premier, le critère relatif à la pression peut être une régression linéaire du type DPDV, avec un temps de réponse de l'ordre de quelques kilomètres. En second, le calcul du coefficient de corrélation K peut être une régression linéaire de l'ordre de la distance inter-régénérations, par exemple entre 200 et 1000 kilomètres. En troisième, le calcul du coefficient de corrélation moyen $K_{moy}$ peut être de l'ordre de plusieurs milliers de kilomètres, par exemple entre 5.000 et 10.000km. C'est grâce à ces trois dynamiques différentes notamment sur leur durée que le procédé peut avantageusement être mis en oeuvre.

En alternative, les modes de calcul du coefficient de corrélation moyen $K_{moy}$ peuvent être multiples. Si la régression ou les régressions sont préférées, d'autres techniques de filtrage peuvent également être utilisées.

Dans ce qui a été précédemment décrit, les critères réel et théorique sont relatifs à la pression, avantageusement à une différence de pression Cependant tout autre critère basé sur une autre information en étant sensible à l'encrassement en agent de dépollution, par exemple l'urée, utilisé pour un estimateur en boucle fermée de la masse de suies peut être utilisable.

Il est aussi également possible de filtrer certains calculs d'un coefficient de corrélation K unitaire selon certaines conditions de roulage dans lesquelles on n'est pas sûr d'une corrélation réelle entre Crit_DP$_{réel}$ et Crit_DP$_{théo}$ même sans encrassement. Cela aura pour conséquence de ralentir la convergence du coefficient de corrélation moyen $K_{moy}$, avec n échantillons utiles pour la régression en plus de temps, mais d'en améliorer la robustesse en ne sélectionnant que des profils de chargement avec le compromis de mise au point en résultant.

Avec la généralisation de la technologie SCR/filtre à particules, le phénomène d'encrassement en agent de dépollution dans le système SCR/ filtre à particules sera de plus en plus présent. Sans stratégie basée sur le procédé de correction selon la présente invention, cela conduit à une augmentation des fausses détections de diagnostic de surcharge en suies, alors qu'il n'y a pas de risque pour le véhicule automobile ainsi que de la dilution moteur due à des demandes non justifiées de régénération par l'estimateur en boucle fermée. Le procédé de correction selon la présente invention apporte une parade à cet encrassement en agent de dépollution, cet encrassement étant assez mal maîtrisé à l'heure actuelle.

## Revendications

1. Procédé de correction d'une estimation en masse (M) de suies dans un filtre à particules en tenant compte de l'encrassement dudit filtre en agent de dépollution provenant d'un système de réduction catalytique sélective ou SCR associé, pour lequel il est sélectionné un critère relatif à la pression et il est mesuré le critère relatif à la pression réel (Crit_DP$_{réel}$) lors d'une mise à jour, ainsi qu'il est estimé une masse (M) de suies à l'intérieur du filtre à particules, **caractérisé en ce qu'il** comprend les étapes suivantes:

   - calcul du critère relatif à la pression théorique (Crit_DP$_{théo}$) à partir de la masse (M) estimée de suies,
   - détermination d'un coefficient de corrélation (K) étant le rapport du critère relatif à la pression réel (Crit_DP$_{réel}$) sur le critère relatif à la pression théorique (Crit_DP$_{théo}$),
   - pour chaque mise à jour du critère relatif à la pression, calcul d'un coefficient de corrélation (K), le coefficient de corrélation Kn pour la nième mise à jour étant défini par :

$$K_n = \frac{\sum (Crit\_DP_{theo} \cdot Crit\_DP_{reel})}{\sum Crit\_DP_{theo}^2}$$

   où Crit_DP$_{théo}$ est le critère relatif à la pression théorique (Crit_DP$_{théo}$) et Crit_DP$_{réel}$ est le critère relatif à la pression réel (Crit_DP$_{réel}$),
   - détermination d'un coefficient de corrélation moyen ($K_{moy}$) des coefficients $K_1$ à $K_n$ des n mises à jour, ce coefficient de corrélation moyen ($K_{moy}$) étant représentatif de l'encrassement en agent de dépollution du filtre à particules,
   - prise en compte du coefficient de corrélation moyen ($K_{moy}$) pour la réactualisation du mode de calcul de la masse (M) estimée en suies du filtre à particules et/ou pour la quantification de l'encrassement en agent de dépollution du filtre à particules.

2. Procédé selon la revendication 1, pour lequel la réactualisation du mode d'estimation de la masse (M) en suies du filtre à particules s'effectue avec la correction du critère relatif à la pression réel (Crit_DP$_{réel}$) en fonction du coefficient de corrélation moyen ($K_{moy}$) en déterminant un critère relatif à la pression corrigé (Crit_DP$_{cor}$) selon la formule :

$$Crit\_DP_{cor} = \frac{Crit\_DP_{reel}}{K_{moy}}$$

**3.** Procédé selon la revendication 2, pour lequel l'estimation de la masse (M) en suies se fait en boucle fermée lors de la détermination du critère relatif à la pression corrigé (Crit_DP$_{cor}$) en tenant compte d'un ou d'autres paramètres (2) influant sur la masse (M) en suies pris unitairement ou en combinaison comme l'encrassement du filtre à particules ou le roulage du véhicule automobile embarquant le filtre à particules.

**4.** Procédé selon l'une quelconque des revendications 1 à 3, pour lequel la quantification de l'encrassement en agent de dépollution du filtre à particules se fait par la détermination d'une caractéristique (C) par cartographie en fonction du coefficient de corrélation (K$_{moy}$), cette caractéristique (C) servant de base à une stratégie de décrassage du filtre à particules ou un diagnostic concernant son encrassement en agent de dépollution.

**5.** Procédé selon l'une quelconque des revendications précédentes, pour lequel le critère relatif à la pression (Crit_DP$_{réel}$) est fonction de la différence de pression aux bornes du filtre à particules.

**6.** Procédé selon la revendication 5, pour lequel le critère relatif à la pression (Crit_DP$_{réel}$) est un critère DPDV calculé selon la formule :

$$DPDV = \frac{\sum(DP \cdot Q_{vol})}{\sum Q_{vol}^{2}}$$

pour laquelle formule DP est la différence de pression aux bornes du filtre à particules et Q$_{vol}$ le débit volumique dans le filtre à particules.

**7.** Procédé selon l'une quelconque des revendications précédentes, pour lequel, lors du calcul du critère relatif à la pression théorique (Crit_DP$_{théo}$), le calcul est affiné en tenant compte d'autres paramètres (2, 2a, 2b) tels que l'encrassement du filtre à particules ou le roulage du véhicule automobile embarquant le filtre à particules.

**8.** Procédé selon l'une quelconque des revendications précédentes, pour lequel la détermination du coefficient de corrélation moyen (K$_{moy}$) des coefficients K$_1$ à K$_n$ des n mises à jour se fait par régression linéaire, par moyenne glissante sur les n coefficients K$_1$ à K$_n$ ou par filtre basse bas.

**9.** Procédé selon la revendication 8, pour lequel, quand la détermination du coefficient de corrélation moyen (K$_{moy}$) des coefficients K$_1$ à K$_n$ des n mises à jour se fait par régression linéaire, le coefficient de corrélation moyen (K$_{moy}$) est exprimé sous la forme d'une droite d'équation:

$$K_{moy(n)} = A_n \cdot Encrassement + B_n$$

avec:

$$A_n = \frac{n \cdot \sum(Encrassement_i \cdot K_i) - (\sum Encrassement_i) \cdot (\sum K_i)}{n \cdot \sum Encrassement_i^2 - (\sum Encrassement_i)^2}$$

et

$$B_n = \frac{\sum Encrassement_i^2 \cdot \sum K_i - \sum Encrassement_i \cdot \sum(Encrassement_i \cdot K_i)}{n \cdot \sum Encrassement_i^2 - (\sum Encrassement_i)^2}$$

10. Procédé selon l'une quelconque des revendications 8 ou 9, pour lequel le calcul du critère relatif à la pression théorique (Crit_DP$_{théo}$) se fait sur une distance de l'ordre de quelques kilomètres, le calcul du coefficient de corrélation (K) se fait sur une distance entre 200 et 1.000 kilomètres tandis que le calcul du coefficient de corrélation moyen (K$_{moy}$) se fait entre 5.000 kilomètres et 10.000 kilomètres.

**Patentansprüche**

1. Verfahren zur Korrektur einer Masseschätzung (M) von Ruß in einem Partikelfilter unter Berücksichtigung der Verschmutzung des Filters mit Reinigungsmittel, das von einem dazu gehörenden System zur selektiven katalytischen Reduktion oder SCR kommt, für das ein den Druck betreffendes Kriterium ausgewählt wird und das den realen Druck betreffende Kriterium (Crit_DP$_{réel}$) bei einer Aktualisierung gemessen wird, so dass eine Masse (M) von Ruß im Inneren des Partikelfilters geschätzt wird, **dadurch gekennzeichnet, dass** es die folgenden Schritte umfasst:

   - Berechnung des den theoretischen Druck betreffenden Kriteriums (Crit_DP$_{théo}$) ausgehend von der geschätzten Masse (M) von Ruß,
   - Bestimmen eines Korrelationskoeffizienten (K), der das Verhältnis des den realen Druck betreffenden Kriteriums (Crit_DP$_{réel}$) zu dem den theoretischen Druck betreffenden Kriterium (Crit_DP$_{théo}$) ist,
   - für jede Aktualisierung des den Druck betreffenden Kriteriums Berechnung eines Korrelationskoeffizienten (K), wobei der Korrelationskoeffizient K$_n$ für die n-te Aktualisierung definiert ist durch:

$$K_n = \frac{\sum(Crit\_DP_{theo} \cdot Crit\_DP_{reel})}{\sum Crit\_DP_{theo}^2}$$

   wobei Crit_DP$_{théo}$ das den theoretischen Druck betreffende Kriterium (Crit_DP$_{théo}$) ist und Crit_DP$_{réel}$ das den realen Druck betreffende Kriterium (Crit_DP$_{réel}$) ist,
   - Bestimmen eines mittleren Korrelationskoeffizienten (K$_{moy}$) der Koeffizienten K$_1$ bis K$_n$ der Aktualisierungen, wobei dieser mittlere Korrelationskoeffizient (K$_{moy}$) für die Verschmutzung mit Reinigungsmittel des Partikelfilters repräsentativ ist,
   - Berücksichtigung des mittleren Korrelationskoeffizienten (K$_{moy}$) für die erneute Aktualisierung des Berechnungsmodus der geschätzten Masse (M) von Ruß des Partikelfilters und/oder für die Quantifizierung der Verschmutzung mit Reinigungsmittel des Partikelfilters.

2. Verfahren nach Anspruch 1, bei dem die erneute Aktualisierung des Schätzungsmodus der Masse (M) von Ruß des Partikelfilters mit der Korrektur des den realen Druck betreffenden Kriteriums (Crit_DP$_{réel}$) in Abhängigkeit von dem mittleren Korrelationskoeffizienten (K$_{moy}$) erfolgt, indem das den korrigierten Druck betreffende Kriterium (Crit_DP$_{cor}$) gemäß der folgenden Formel bestimmt wird:

$$Crit\_DP_{cor} = \frac{Crit\_DP_{reel}}{K_{moy}}$$

3. Verfahren nach Anspruch 2, wobei die Schätzung der Masse (M) von Ruß in geschlossener Schleife beim Bestimmen des den korrigierten Druck betreffenden Kriteriums (Crit_DP$_{cor}$) unter Berücksichtigung eines oder anderer Parameter (2) erfolgt, die sich auf die Masse (M) von Ruß auswirken, einzeln oder kombiniert genommen, wie die Verschmutzung des Partikelfilters oder das Fahren des Kraftfahrzeugs, auf dem das Partikelfilter mitgeführt ist.

4. Verfahren nach einem der Ansprüche 1 bis 3, bei dem die Quantifizierung der Verschmutzung mit Reinigungsmittel des Partikelfilters durch das Bestimmen eines Merkmals (C) durch Kartographie in Abhängigkeit von dem Korrelationskoeffizienten (K$_{moy}$) erfolgt, wobei dieses Kriterium (C) als Grundlage für eine Reinigungsstrategie des Partikelfilters oder eine Diagnose seiner Verschmutzung mit Reinigungsmittel dient.

5. Verfahren nach einem der vorhergehenden Ansprüche, bei dem das den Druck betreffende Kriterium (Crit_DP$_{réel}$) von dem Druckunterschied an den Anschlüssen des Partikelfilters abhängt.

6. Verfahren nach Anspruch 5, bei dem das den Druck betreffende Kriterium (Crit_DP$_{réel}$) ein DPDV-Kriterium ist, das nach der folgenden Formel berechnet wird:

$$DPDV = \frac{\sum(DP \cdot Q_{vol})}{\sum Q_{vol}^2}$$

wobei in der Formel DP der Druckunterschied an den Anschlüssen des Partikelfilters ist und Q$_{vol}$ der Volumenstrom in dem Partikelfilter ist.

7. Verfahren nach einem der vorhergehenden Ansprüche, bei dem bei der Berechnung des den theoretischen Druck betreffenden Kriteriums (Crit_DP$_{théo}$) die Berechnung unter Berücksichtigung anderer Parameter (2, 2a, 2b), wie zum Beispiel die Verschmutzung des Partikelfilters oder das Fahren des Kraftfahrzeugs, das das Partikelfilter mitgeführt, verfeinert wird.

8. Verfahren nach einem der vorhergehenden Ansprüche, bei dem die Bestimmung des mittleren Korrelationskoeffizienten (K$_{moy}$) der Koeffizienten K$_1$ bis K$_n$ der n Aktualisierungen durch lineare Regression, Gleitmittel auf den n Koeffizienten K$_1$ bis K$_n$ oder Tiefpassfilter erfolgt.

9. Verfahren nach Anspruch 8, bei dem, wenn die Bestimmung des mittleren Korrelationskoeffizienten (K$_{moy}$) der Koeffizienten K$_1$ bis K$_n$ der n Aktualisierungen durch lineare Regression erfolgt, der mittlere Korrelationskoeffizient (K$_{moy}$) in der Form einer Geraden mit folgender Gleichung ausgedrückt wird:

$$K_{moy(n)} = A_n \cdot Encrassement + B_n$$

wobei

$$A_n = \frac{n \cdot \sum(Encrassement_i \cdot K_i) - (\sum Encrassement_i) \cdot (\sum K_i)}{n \cdot \sum Encrassement_i^2 - (\sum Encrassement_i)^2}$$

und

$$B_n = \frac{\sum Encrassement_i^2 \cdot \sum K_i - \sum Encrassement_i \cdot \sum(Encrassement_i \cdot K_i)}{n \cdot \sum Encrassement_i^2 - (\sum Encrassement_i)^2}$$

10. Verfahren nach einem der Ansprüche 8 oder 9, bei dem die Berechnung des den theoretischen Druck betreffenden Kriteriums (Crit_DP$_{théo}$) auf einer Entfernung in der Größenordnung von einigen Kilometern erfolgt, die Berechnung des Korrelationskoeffizienten (K) auf einer Entfernung zwischen 200 und 1.000 Kilometern erfolgt, während die Berechnung des mittleren Korrelationskoeffizienten (K$_{moy}$) zwischen 5.000 Kilometern und 10.000 Kilometern erfolgt.

**Claims**

1. A method for correcting a soot mass estimation (M) in a particle filter taking into account the contamination of said filter with depollution agent originating from an associated selective catalytic reduction or SCR system, for which a criterion is selected related to the pressure and the actual pressure-related criterion (Crit_DP$_{réel}$) is measured on an update, and a mass (M) of soot in the interior of the particle filter is estimated, **characterized in that** it includes the following steps:

   - calculation of the theoretical pressure-related criterion (Crit_DP$_{théo}$) from the estimated mass (M) of soot,

- determining of a correlation coefficient (K) being the relationship of the actual pressure-related (Crit_DP$_{réel}$) over the theoretical pressure-related criterion (Crit_DP$_{théo}$),
- for each update of the pressure-related criterion, calculation of a correlation coefficient (K), the correlation coefficient K$_n$ for the n$^{th}$ update being defined by:

$$K_n = \frac{\sum(Crit\_DP_{theo} \cdot Crit\_DP_{reel})}{\sum Crit\_DP_{theo}^2}$$

where Crit_DP$_{théo}$ is the theoretical pressure-related criterion (Crit_DP$_{théo}$) and Crit_DP$_{réel}$ is the actual pressure-related criterion (Crit_DP$_{réel}$),
- determining of a mean correlation coefficient (K$_{moy}$) of the coefficients K$_1$ to K$_n$ of the n updates, this mean correlation coefficient (K$_{moy}$) being representative of the contamination with depollution agent of the particle filter,
- taking into account of the mean correlation coefficient (K$_{moy}$) for the re-updating of the mode of calculation of the estimated mass (M) of soot of the particle filter and/or for the quantification of the contamination with depollution agent of the particle filter.

2. The method according to claim 1, for which the re-updating of the estimation mode of the mass (M) of soot of the particle filter is carried out with the correction of the actual pressure-related criterion (Crit_DP$_{réel}$) as a function of the mean correlation coefficient (K$_{moy}$) by determining a corrected pressure-related criterion (Crit_DP$_{cor}$) according to the formula:

$$Crit\_DP_{cor} = \frac{Crit\_DP_{reel}}{K_{moy}}$$

3. The method according to claim 2, for which the estimation of the mass (M) of soot is carried out in a closed loop during the determination of the corrected pressure-related criterion (Crit_DP$_{cor}$) taking into account one or other parameters (2) influencing the mass (M) of soot taken solely or in combination as the contamination of the particle filter or the running of the motor vehicle having the particle filter on board.

4. The method according to any one of claims 1 to 3, for which the quantification of the contamination with depollution agent of the particle filter is carried out by the determining of a characteristic (C) by cartography as a function of the correlation coefficient (K$_{moy}$), this characteristic (C) serving as the basis of a strategy for cleaning of the particle filter or a diagnostic concerning its contamination with depollution agent.

5. The method according to any one of the preceding claims, for which the pressure-related criterion (Crit_DP$_{réel}$) is a function of the difference in pressure at the limits of the particle filter.

6. The method according to claim 5, for which the pressure-related criterion (Crit_DP$_{réel}$) is a criterion DPDV calculated according to the formula:

$$DPDV = \frac{\sum(DP \cdot Q_{vol})}{\sum Q_{vol}^2}$$

for which formula DP is the difference in pressure at the limits of the particle filter and Q$_{vol}$ is the volume flow rate in the particle filter.

7. The method according to any one of the preceding claims, for which, during the calculation of the theoretical pressure-related criterion (Crit_DP$_{théo}$), the calculation is refined, taking into account other parameters (2, 2a, 2b), such as the contamination of the particle filter or the running of the motor vehicle having the particle filter on board.

8. The method according to any one of the preceding claims, for which the determining of the mean correlation coefficient ($K_{moy}$) of the coefficients $K_1$ to $K_n$ of the n updates is carried out by linear regression, by moving average over the n coefficients $K_1$ to $K_n$ or by low-pass filter.

9. The method according to claim 8, for which, when the determining of the mean correlation coefficient ($K_{moy}$) of the coefficients $K_1$ to $K_n$ of the n updates is carried out by linear regression, the mean correlation coefficient ($K_{moy}$) is expressed in the form of an equation line:

$$K_{moy(n)} = A_n \cdot Encrassement + B_n$$

with:

$$A_n = \frac{n \cdot \sum (Encrassement_i \cdot K_i) - (\sum Encrassement_i) \cdot (\sum K_i)}{n \cdot \sum Encrassement_i^2 - (\sum Encrassement_i)^2}$$

and

$$B_n = \frac{\sum Encrassement_i^2 \cdot \sum K_i - \sum Encrassement_i \cdot \sum (Encrassement_i \cdot K_i)}{n \cdot \sum Encrassement_i^2 - (\sum Encrassement_i)^2}$$

10. The method according to any one of claims 8 or 9, for which the calculation of the theoretical pressure-related criterion ($Crit\_DP_{théo}$) is made over a distance in the order of several kilometres, the calculation of the correlation coefficient ($K$) is made over a distance of between 200 and 1,000 kilometres, whilst the calculation of the mean correlation coefficient ($K_{moy}$) is made between 5,000 kilometres and 10,000 kilometres.

FIG.1

FIG.2

**FIG.3**

**FIG.4**

Caractérisation chiffrée C encrassement urée

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 2163740 A1